# EUROPÄISCHE PATENTANMELDUNG

(11) **EP 2 104 366 A2**
(43) Veröffentlichungstag der Anmeldung: **23.09.2009**
(21) Anmeldenummer: 09003152.7
(22) Anmeldetag: 05.03.2009
(51) Int. Cl.: H04Q 1/14

(54) **Verteilereinrichtung einer Telekommunikationsanlage sowie Verteilerleiste einer Verteilereinrichtung**

(30) Priorität: 20.03.2008 DE 202008004035 U
(71) Anmelder: CCS Technology, Inc., Wilmington, DE 19803 (US)
(72) Erfinder: Badura, Stefan, Dipl.-Ing., 58708 Menden (DE); Breuer-heckel, Mike, Dipl.-Ing., 44143 Dortmund (DE); Matthies, Jürgen, Dipl.-Ing., 58300 Wetter (Ruhr) (DE); Lipkowski, Marc, Dipl.-Ing., 58640 Iserlohn (DE); Klockau, Jörg, Dr.-Ing., 89250 Senden (DE); Hoffmann, Dr.-Ing., 58097 Hagen (DE)
(74) Vertreter: Sturm, Christoph

(57) **Zusammenfassung**

Die Erfindung betrifft einen Verteilerblock, mit einer Aufnahmeeinrichtung, mit mehreren Verteilerleisten (20) und mit mehreren Drahtführungselementen (21, 22), wobei die Verteilerleisten (20) und die Drahtführungselemente (21, 22) in der Aufnahmeeinrichtung sandwichartig angeordnet sind, wobei jede Verteilerleiste (20) an einer Vorderseite positionierte Anschlusselemente (a, b, a', b') für den Anschluss von Kabeladern und Kontaktfedern aufweist, die mit den Anschlusselementen elektrisch leitend verbunden sind und Funktionselemente ausbilden, wobei jedes Drahtführungselement (21, 22) Drahtführungskanäle (25, 26) zur Führung der Kabeladern aufweist, derart, dass im Bereich jedes Drahtführungselements die Kabeladern an jeweils einer in etwa senkrecht zur Vorderseite verlaufenden Seite über Eintrittsöffnungen der Drahtführungskanäle (25, 26) in dieselben einfädelbar und über an der Vorderseite positionierte Austrittsöffnungen der Drahtführungskanäle (25, 26) aus denselben ausfädelbar und den Anschlusselementen (a, b, a', b') zuführbar sind. Erfindungsgemäß sind die Drahtführungskanäle (25, 26) der Drahtführungselemente (21, 22) derart ausgeführt, dass sich zumindest einige der in unterschiedlichen Drahtführungskanälen desselben Drahtführungselements geführten Kabeladern im Bereich des jeweiligen Drahtführungselements (25, 26) ohne elektrischen Kontakt zwischen denselben überkreuzen. (Fig. 2)

## Beschreibung

Die Erfindung betrifft eine Verteilereinrichtung einer Telekommunikationsanlage gemäß dem Oberbegriff des Anspruchs 1. Des Weiteren betrifft die Erfindung eine Verteilerleiste einer Verteilereinrichtung einer Telekommunikationsanlage gemäß dem Oberbegriff des Anspruchs 11.

Die DE 100 29 870 A1 offenbart eine als Verteilerblock ausgebildete Verteilereinrichtung einer Telekommunikationsanlage mit einer als Aufnahmewanne ausgebildeten Aufnahmeeinrichtung, in welcher sandwichartig übereinander mehrere Verteilerleisten sowie Drahtführungselemente positioniert sind. Die Verteilerleisten verfügen an einer Vorderseite des Verteilerblocks über IDC-Kontakte für den Anschluss ankommender bzw. abgehender Kabeladern. Die Drahtführungselemente weisen Drahtführungskanäle zur Führung der Kabeladern auf.

Zur Realisierung hoher Packungsdichten werden die Verteilerleisten sowie Drahtführungselemente mit möglichst geringen Abmessungen sowie möglichst kompakt ausgeführt. Kabeladern liegen demnach dicht beieinander. Insbesondere bei der Übertragung von Daten mit hohen Übertragungsfrequenzen kann es zwischen Kabeladern unterschiedlicher Teilnehmer, die an einem solchen Verteilerblock rangiert bzw. verdrahtet werden, zu einem unerwünschten sogenannten Nahnebensprechen kommen.

Die gegenseitige Beeinflussung von Teilnehmern durch das sogenannte Nahnebensprechen beeinträchtigt die Übertragungsqualität und ist insgesamt von Nachteil.

Zur Reduzierung von unerwünschtem Nahnebensprechen bei Verteilereinrichtungen ist es aus der WO 2006/094570 A1 bereits bekannt, einerseits mit unterschiedlichen Verteilerleisten zusammenwirkende Kabeladern unterschiedlicher Teilnehmer und andererseits mit derselben Verteilerleiste zusammenwirkende Kabeladern unterschiedlicher Teilnehmer gegeneinander zu schirmen. Derartige Maßnahmen zur Schirmung von Kabeladern erfordern einen hohen Aufwand. Es besteht daher ein Bedarf an einer Verteilereinrichtung einer Telekommunikationsanlage, mit welcher unerwünschtes Nahnebensprechen mit geringerem Aufwand reduziert werden kann.

Hiervon ausgehend liegt der vorliegenden Erfindung das Problem zu Grunde, eine neuartige Verteilereinrichtung einer Telekommunikationsanlage sowie eine neuartige Verteilerleiste einer Verteilereinrichtung einer Telekommunikationsanlage zu schaffen.

Dieses Problem wird durch eine Verteilereinrichtung mit den Merkmalen des Anspruchs 1 gelöst. Erfindungsgemäß sind die Drahtführungskanäle der Drahtführungselemente derart ausgeführt sind, dass sich zumindest einige der in unterschiedlichen Drahtführungskanälen desselben Drahtführungselements geführten Kabeladern im Bereich des jeweiligen Drahtführungselements ohne elektrischen Kontakt zwischen denselben überkreuzen.

Durch die erfindungsgemäße Überkreuzung von in unterschiedlichen Drahtführungskanälen geführten Kabeladern ohne elektrischen Kontakt zwischen den Kabeladern kann eine Nahnebensprechdämpfung und damit eine Reduzierung von unerwünschtem Nahnebensprechen zwischen unterschiedlichen Teilnehmern mit einfachen Mitteln realisiert werden. Auf Schirmungsmaßnahmen kann gegebenenfalls vollständig verzichtet werden.

Vorzugsweise sind die Drahtführungskanäle der Drahtführungselemente derart ausgeführt, dass sich zumindest einige der in unterschiedlichen Drahtführungskanälen geführten benachbarten Kabeladern unterschiedlicher Teilnehmer und/oder zumindest einige der in unterschiedlichen Drahtführungskanälen geführten, benachbarten Kabeladern desselben Teilnehmers ohne elektrischen Kontakt zwischen denselben überkreuzen.

Dann, wenn die ankommenden Kabeladern sowie abgehenden Kabeladern eines Teilnehmers unter Ausbildung von ankommenden Kabeladerpaaren und abgehenden Kabeladerpaaren verdrillt sind, sind die jeweiligen verdrillten Kabeladerpaare jeweils durch einen gemeinsamen Drahtführungskanal geführt und die erfindungsgemäße Überkreuzung bezieht sich auf die Überkreuzung von in unterschiedlichen Drahtführungskanälen geführten, verdrillten Kabeladerpaaren unterschiedlicher Teilnehmer.

Dann, wenn die ankommenden Kabeladern sowie abgehenden Kabeladern eines Teilnehmers nicht verdrillt sind, sind die jeweiligen nicht-verdrillten Kabeladern jeweils durch separate Drahtführungskanäle geführt und die erfindungsgemäße Überkreuzung bezieht sich auf die Überkreuzung von nicht-verdrillten Kabeladern unterschiedlicher Teilnehmer und/oder von nicht-verdrillten Kabeladern desselben Teilnehmers.

Nach einer vorteilhaften Weiterbildung der Erfindung sind die Verteilerleisten derart ausgeführt, dass sich zumindest einige der Kontaktfedern der Verteilerleiste ohne elektrischen Kontakt zwischen denselben überkreuzen. Durch die berührungslose Überkreuzung von Kontaktfedern der Verteilerleiste kann Nahnebensprechen zwischen Teilnehmern weiter reduziert werden.

Vorzugsweise sind die Verteilerleisten derart ausgeführt, dass sich zumindest einige der benachbarten Kontaktfedern unterschiedlicher Teilnehmer und/oder zumindest einige der benachbarten Kontaktfedern desselben Teilnehmers ohne elektrischen Kontakt zwischen denselben überkreuzen.

Die erfindungsgemäße Verteilerleiste einer Verteilereinrichtung einer Telekommunikationsanlage ist im unabhängigen Anspruch 11 definiert.

Bevorzugte Weiterbildungen der Erfindung ergeben sich aus den Unteransprüchen und der nachfolgenden Beschreibung. Ausführungsbeispiele werden anhand der Zeichnung näher erläutert. In der Zeichnung zeigt:
- Fig. 1: eine schematisierte Vorderansicht einer Verteilerleiste einer aus dem Stand der Technik bekannten Verteilereinrichtung mit oberhalb und unterhalb derselben positionierten Drahtführungselementen;
- Fig. 2: eine schematisierte Vorderansicht einer Verteilerleiste einer ersten erfindungsgemäßen Verteilereinrichtung mit oberhalb und unterhalb derselben positionierten Drahtführungselementen;
- Fig. 3:: eine schematisierte Vorderansicht einer Verteilerleiste einer zweiten erfindungsgemäßen Verteilereinrichtung mit oberhalb und unterhalb derselben positionierten Drahtführungselementen; und
- Fig. 4:: eine schematisierte Vorderansicht einer Verteilerleiste einer dritten erfindungsgemäßen Verteilereinrichtung mit oberhalb und unterhalb derselben positionierten Drahtführungselementen.

Die hier vorliegende Erfindung betrifft eine Verteilereinrichtung einer Telekommunikationsanlage, insbesondere einen Hauptverteilerblock eines Hauptverteilers einer Telekommunikationsanlage.

Der prinzipielle Aufbau einer als Verteilerblock ausgebildeten Verteilereinrichtung ist aus dem Stand der Technik, z. B. aus der WO 2006/094570 A1 bekannt. So umfasst ein Verteilerblock eine Aufnahmeeinrichtung, in welcher sandwichartig übereinander bzw. nebeneinander mehrere Verteilerleisten und mehrere Drahtführungselemente angeordnet sind.

Jede Verteilerleiste eines solchen Verteilerblocks verfügt über an einer Vorderseite des Verteilerblocks positionierte, als IDC-Kontakte ausgebildete Anschlusselemente für den Anschluss ankommender bzw. abgehender Kabeladern, wobei die als IDC-Kontakte ausgebildeten Anschlusselemente in zwei Reihen übereinander positioniert sind, nämlich derart, dass in einer ersten Reihe als IDC-Kontakte ausgebildete Anschlusselemente für den Anschluss ankommender Kabeladern und in einer zweiten Reihe als IDC-Kontakte ausgebildete Anschlusselemente für den Anschluss abgehender Kabeladern positioniert sind.

Die als IDC-Kontakte ausgebildeten Anschlusselemente jeder Verteilerleiste sind elektrisch leitend mit sogenannten Kontaktfedern der Verteilerleisten verbunden bzw. von denselben fortgesetzt, wobei die Kontaktfedern entweder als Trennelemente oder als Schaltelemente ausgebildete Funktionselemente der Verteilerleisten ausbilden.

Die Drahtführungselemente eines solchen Verteilerblocks umfassen Drahtführungskanäle, um ankommende bzw. abgehende Kabeladern zu führen. So sind ankommende Kabeladern ausgehend von einer ersten Seite des Verteilerblocks, die in etwa senkrecht zur Vorderseite desselben verläuft, in Eintrittsöffnungen der Drahtführungskanäle in dieselben einfädelbar und über an der Vorderseite des Verteilerblocks positionierte Austrittsöffnungen der Drahtführungskanäle aus denselben ausfädelbar und den Anschlusselementen zuführbar.

An einer der ersten Seite gegenüberliegenden zweiten Seite des Verteilerblocks, die ebenfalls in etwa senkrecht zur Vorderseite desselben verläuft, sind abgehende Kabeladern in Eintrittsöffnungen der Drahtführungskanäle einfädelbar über an der Vorderseite des Verteilerblocks positionierte Austrittsöffnungen aus denselben ausfädelbar und den Anschlusselementen zuführbar.

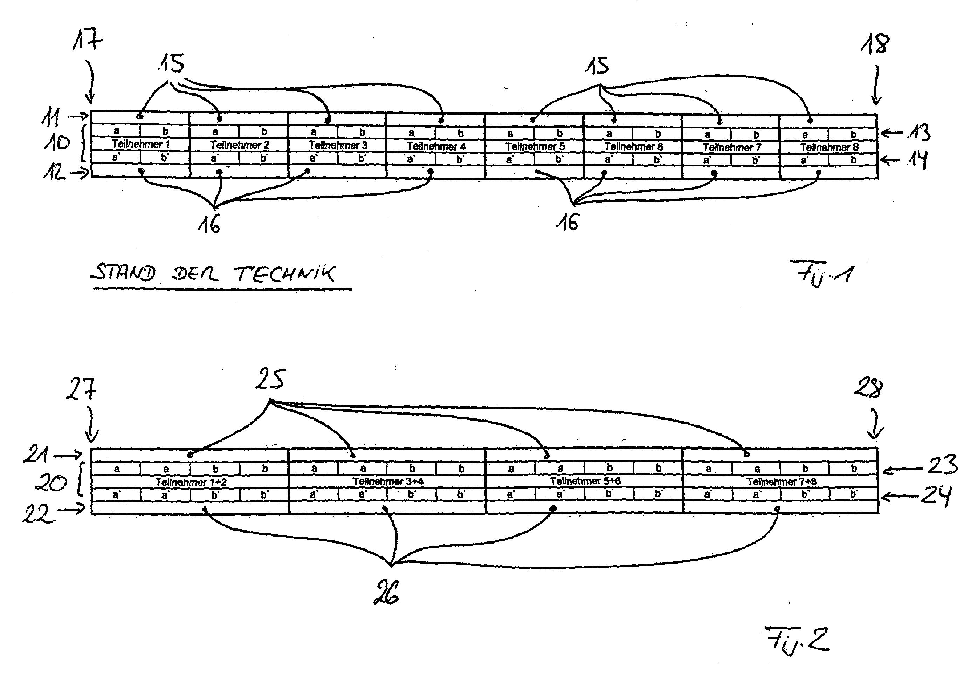

Fig. 1 zeigt eine schematisierte Vorderansicht einer Verteilerleiste 10 sowie von der Verteilerleiste 10 zugeordneten Drahtführungselementen 11, 12 eines aus dem Stand der Technik bekannten Verteilerblocks. Die Verteilerleiste 10 verfügt über in zwei Reihen 13, 14 positionierte, als IDC-Kontakte ausgebildete Anschlusselemente a, b, a' und b' für den Anschluss ankommender und abgehender Kabeladern. Die in einer ersten Reihe 13 positionierten Anschlusselemente a und b dienen dabei dem Anschluss ankommender Kabeladern, die den Anschlusselementen a und b über Drahtführungskanäle 15 des Drahtführungselements 11 zugeführt werden. Die in der zweiten Reihe 14 positionierten Anschlusselemente a' und b' dienen dem Anschluss abgehender Kabeladern, die den Anschlusselementen a' und b' über Drahtführungskanäle 16 des Drahtführungselements 12 zugeführt werden. Gemäß Fig. 1 verfügt die Verteilerleiste 10 über Anschlusselemente a, b, a' und b' für insgesamt acht Teilnehmer.

Wie bereits erwähnt, zeigt Fig. 1 eine Vorderansicht der Verteilerleiste 10 sowie der Drahtführungselemente 11, 12, sodass in Fig. 1 demnach nur die als IDC-Kontakte ausgebildeten Anschlusselemente a, b, a' und b' der Verteilerleiste 10 sowie Austrittsöffnungen der Drahtführungskanäle 15, 16 der Drahtführungselemente 11, 12 sichtbar sind.

Kontaktfedern, welche die Anschlusselemente a, b, a' und b' der Verteilerleiste 10 im Inneren derselben unter Ausbildung von Trennelementen oder Schaltelementen fortsetzen, sind in Fig. 1 nicht sichtbar.

Bei der Ausbildung von Trennelementen berühren sich übereinander angeordnete, von den IDC-Kontakten beabstandete freie Enden der Kontaktfedern. Bei der Ausbildung von Schaltelementen hingegen berühren sich diese freie Enden der Kontaktfedern nicht. Ebenso sind in Fig. 1 die Eintrittsöffnungen der Drahtführungskanäle 15, 16, die an in etwa senkrecht zur Vorderseite verlaufenden Seiten 17, 18 des Verteilerblocks ausgebildet sind, nicht sichtbar.

Fig. 2 zeigt eine Vorderansicht eines Ausschnitts aus einer erfindungsgemäßen Verteilereinrichtung im Bereich einer Verteilerleiste 20 sowie im Bereich von oberhalb sowie unterhalb der Verteilerleiste 20 positionierten Drahtführungselementen 21, 22.

Die Verteilerleiste 20 verfügt über in zwei Reihen 23, 24 positionierte, als IDC-Kontakte ausgebildete Anschlusselemente a, b, a' und b' für den Anschluss ankommender bzw. abgehender Kabeladern von wiederum acht Teilnehmern, wobei Anschlusselemente a und b für den Anschluss ankommender Kabeladern in der ersten Reihe 23 und Anschlusselemente a' und b' für den Anschluss abgehender Kabeladern in der zweiten Reihe 24 positioniert sind.

Den Anschlusselementen a und b der ersten Reihe 23 sind die ankommenden Kabeladern der Teilnehmer über Drahtführungskanäle 25 des Drahtführungselements 21 zuführbar, wobei in der Vorderansicht der Fig. 2 ausschließlich Austrittsöffnungen der Drahtführungskanäle 25 sichtbar sind. Eintrittsöffnungen derselben sind an einer senkrecht zur Vorderseite verlaufenden ersten Seite 27 des Verteilerblocks ausgebildet.

Den Anschlusselementen a' und b' der zweiten Reihe 24 sind die abgehenden Kabeladern der Teilnehmer über Drahtführungskanäle 26 des Drahtführungselements 22 zuführbar, wobei in Fig. 2 wiederum nur die Austrittsöffnungen dieser Drahtführungskanäle 26 sichtbar sind. Eintrittsöffnungen derselben sind im Bereich einer der ersten Seite 27 gegenüberliegenden zweiten Seite 28 des Verteilerblocks ausgebildet.

Die als IDC-Kontakte ausgebildeten Anschlusselemente a, b, a' und b' der Verteilerleiste 20 sind wiederum im Inneren der Verteilerleiste 20 durch nichtdargestellte Kontaktfedern fortgesetzt, die als Trennelemente oder Schaltelemente ausgebildete Funktionselemente für die acht Teilnehmer ausbilden.

Im Sinne der hier vorliegenden Erfindung sind die Drahtführungskanäle 25 und/oder 26 der Drahtführungselemente 21 und/oder 22 derart ausgeführt, dass sich zumindest einige der in unterschiedlichen Drahtführungskanälen desselben Drahtführungselements geführten Kabeladern im Bereich zwischen den Eintrittsöffnungen und Austrittsöffnungen der Drahtführungskanäle 25 und/oder 26 ohne elektrischen Kontakt zwischen denselben überkreuzen.

Im Ausführungsbeispiel der Fig. 2 überkreuzen sich zumindest einige der in unterschiedlichen Drahtführungskanälen 25 des Drahtführungselements 11 geführten Kabeladern sowie zumindest einige der in unterschiedlichen Drahtführungskanälen 26 des Drahtführungselements 22 geführten Kabeladern, also sowohl einige der ankommenden Kabeladern sowie einige der abgehenden Kabeladern. Dies kann Fig. 2 dadurch entnommen werden, dass die Reihenfolge der Anschlusselemente a, b, a' und b' in den Reihen 23 und 24 der Verteilerleiste 20 gegenüber Fig. 1 vertauscht ist.

So sind gemäß Fig. 2 sowohl im Bereich der Drahtführungskanäle 25 als auch im Bereich der Drahtführungskanäle 26 benachbarte, in unterschiedlichen Drahtführungskanälen desselben Drahtführungselements geführte Kabeladern unterschiedlicher Teilnehmer ohne elektrischen Kontakt zwischen denselben überkreuzt. So sind die zu den Anschlüssen a und a' des Teilnehmers 2 führenden Kabeladern mit den zu den Anschlüssen b und b' des Teilnehmers 1 führenden Kabeladern überkreuzt. Gleiches gilt für die Teilnehmer 3 und 4, 5 und 6 sowie 7 und 8.

Bedingt dadurch, dass sowohl zumindest einige der benachbarten ankommenden Kabeladern unterschiedlicher Teilnehmer als auch zumindest einige der benachbarten abgehenden Kabeladern unterschiedlicher Teilnehmer in den Drahtführungselementen 21 und 22 ohne elektrischen Kontakt zwischen denselben überkreuzt sind, können die Kontaktfedern innerhalb der Verteilerleiste 20 überkreuzungsfrei, wie im Stand der Technik üblich, verlaufen.

Es sei darauf hingewiesen, dass die erfindungsgemäße Überkreuzung im Bereich der Drahtführungselemente nicht mit verdrillten Kabeladerpaaren eines Teilnehmers verwechselt werden darf. Dann, wenn die ankommenden Kabeladern sowie abgehenden Kabeladern eines Teilnehmers unter Ausbildung von ankommenden Kabeladerpaaren und abgehenden Kabeladerpaaren verdrillt sind, sind die jeweiligen verdrillten Kabeladerpaare jeweils durch einen gemeinsamen Drahtführungskanal geführt und die erfindungsgemäße Überkreuzung bezieht sich auf die Überkreuzung von in unterschiedlichen Drahtführungskanälen geführten, verdrillten Kabeladerpaaren unterschiedlicher Teilnehmer. Dann, hingegen wenn die ankommenden Kabeladern sowie abgehenden Kabeladern eines Teilnehmers nicht verdrillt sind, sind die jeweiligen nicht-verdrillten Kabeladern jeweils durch separate Drahtführungskanäle geführt und die erfindungsgemäße Überkreuzung bezieht sich auf die Überkreuzung von in unterschiedlichen Drahtführungskanälen geführten, nicht-verdrillten Kabeladern unterschiedlicher Teilnehmer und/oder von in unterschiedlichen Drahtführungskanälen geführten, nicht-verdrillten Kabeladern desselben Teilnehmers.

Durch die erfindungsgemäße Überkreuzung von zu den Anschlusselementen verlaufenden Kabeladern im Bereich der Drahtführungselemente ohne elektrischen Kontakt zwischen den Kabeladern kann eine gute Nahnebensprechdämpfung und damit ein vermindertes Nahnebensprechen zwischen unterschiedlichen Teilnehmern realisiert werden. Hierzu sind gemäß Fig. 2 benachbarte, in unterschiedlichen Drahtführungskanälen geführte Kabeladern unterschiedlicher Teilnehmer überkreuzt, nämlich im Ausführungsbeispiel der Fig. 2 sowohl benachbarte ankommende Kabeladern als auch benachbarte abgehende Kabeladern unterschiedlicher Teilnehmer.

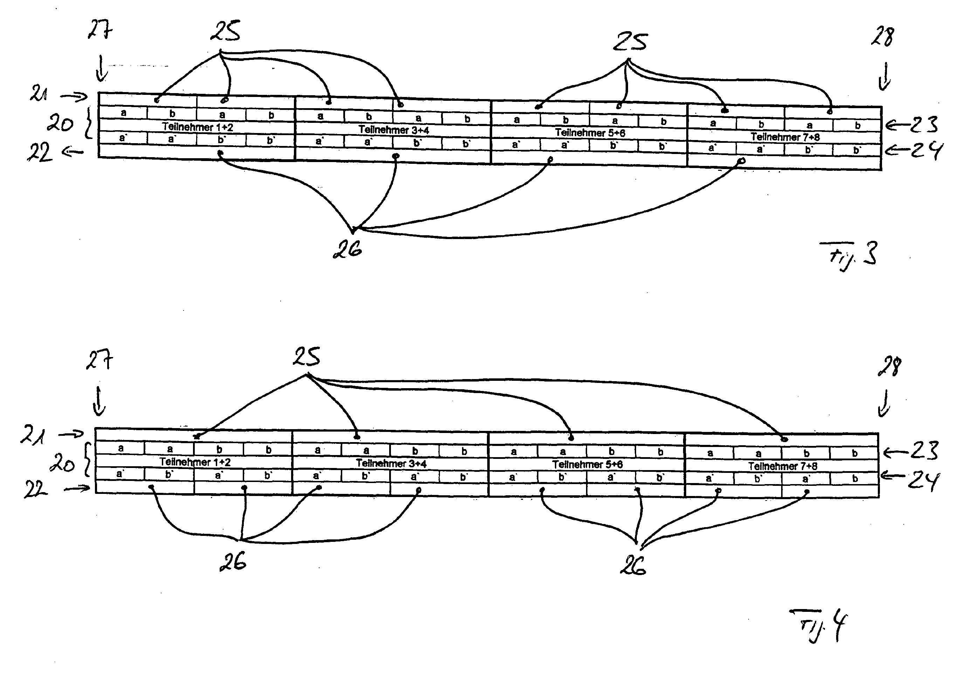

Fig. 3 und 4 zeigen Varianten zum Ausführungsbeispiel der Fig. 2, wobei zur Vermeidung unnötiger Wiederholungen für gleiche Baugruppen gleiche Bezugsziffern verwendet werden und nachfolgend nur auf solche Details eingegangen wird, durch die sich die Ausführungsbeispiele der Fig. 3 und 4 vom Ausführungsbeispiel der Fig. 2 unterscheiden.

Im Ausführungsbeispiel der Fig. 3 sind ausschließlich innerhalb der Drahtführungskanäle 26 des Drahtführungselements 22 zu den Anschlusselementen a' und b' führende Kabeladern, die in unterschiedlichen Drahtführungskanälen desselben Drahtführungselements 22 geführt sind, überkreuzt, nämlich benachbarte abgehende Kabeladern unterschiedlicher Teilnehmer.

Im Ausführungsbeispiel der Fig. 4 sind ausschließlich im Bereich der Drahtführungskanäle 25 des Drahtführungselements 21 zu den Anschlusselementen a und b führende Kabeladern, die in unterschiedlichen Drahtführungskanälen desselben Drahtführungselements 21 geführt sind, überkreuzt, nämlich benachbarte ankommende Kabeladern unterschiedlicher Teilnehmer.

In den Ausführungsbeispielen der Fig. 3 und 4 ist es dann erforderlich, zusätzlich im Bereich der Verteilerleiste 20 die Kontaktfedern derjenigen Anschlusselemente ohne elektrischen Kontakt zu überkreuzen, an welche die einerseits überkreuzten benachbarten Kabeladern und andererseits die nicht überkreuzten benachbarten Kabeladern der Teilnehmer anschließbar sind.

So muss nämlich in Fig. 3 und 4 für sämtliche Teilnehmerpaare 1 und 2, 3 und 4, 5 und 6 sowie 7 und 8 gewährleistet werden, dass jeweils den Anschlusselementen a zugeordnete Kontaktfedern mit den Anschlusselementen a' zugeordneten Kontaktfedern und den Anschlusselementen b zugeordneten Kontaktfedern mit den Anschlusselementen b' zugeordneten Kontaktfedern elektrisch leitend kontaktierbar sind.

In den gezeigten Ausführungsbeispielen der Fig. 2 bis 4 sind in den Drahtführungselementen zumindest einige der in unterschiedlichen Drahtführungskanälen derselben geführten, benachbarten Kabeladern unterschiedlicher Teilnehmer ohne elektrischen Kontakt zwischen denselben überkreuzt. Ebenso sind gegebenenfalls in den Verteilerleisten zumindest einige der benachbarten Kontaktfedern unterschiedlicher Teilnehmer ohne elektrischen Kontakt zwischen denselben überkreuzt.

Im Unterschied hierzu ist es auch möglich, dass zusätzlich oder alternativ in den Drahtführungselementen zumindest einige der in unterschiedlichen Drahtführungskanälen derselben geführten, benachbarten sowie unverdrillten Kabeladern derselben Teilnehmer ohne elektrischen Kontakt zwischen denselben überkreuzt. Ebenso sind gegebenenfalls in den Verteilerleisten zumindest einige der benachbarten Kontaktfedern derselben Teilnehmer ohne elektrischen Kontakt zwischen denselben überkreuzt.

Zur Überkreuzung der in unterschiedlichen Drahtführungskanälen geführten Kabeladern sind die Drahtführungskanäle unter Ausbildung von Überkreuzungen zumindest abschnittsweise übereinander geführt. Ebenso sind zur Überkreuzung der Kontaktfedern die Kontaktfedern unter Ausbildung von Überkreuzungen zumindest abschnittsweise übereinander geführt.

Die Erfindung ist auch dann einsetzbar, wenn Verteilerleisten ohne Drahtführungselemente zum Einsatz kommen. In diesem Fall überkreuzen sich dann zumindest einige der Kontaktfedern der Verteilerleiste ohne elektrischen Kontakt zwischen denselben. Eine solche Verteilerleiste kann so ausgebildet sein, dass die Anschlusselemente für den Anschluss ankommender Kabeladern und die Anschlusselemente für den Anschluss abgehender Kabeladern allesamt an der Vorderseite der Verteilerleiste positioniert sind, wobei Kontaktfedern, die mit den Anschlusselementen elektrisch leitend verbunden sind bzw. dieselben fortsetzen, als Funktionselemente Trennelemente oder Schaltelemente ausbilden. Ebenso kann eine solche Verteilerleiste so ausgebildet sein, dass die Anschlusselemente für den Anschluss ankommender Kabeladern an der Vorderseite oder Rückseite der Verteilerleiste und die Anschlusselementen für den Anschluss abgehender Kabeladern an der jeweiligen gegenüberliegenden Rückseite oder Vorderseite positioniert sind, wobei die Kontaktfedern, die mit den Anschlusselementen elektrisch leitend verbunden sind bzw. dieselben fortsetzen, als Funktionselemente Durchgangselemente ausbilden.

### Bezugszeichenliste

- 10: Verteilerleiste
- 11: Drahtführungselement
- 12: Drahtführungselement
- 13: Reihe
- 14: Reihe
- 15: Drahtführungskanal
- 16: Drahtführungskanal
- 17: Seite
- 18: Seite

- 20: Verteilerleiste
- 21: Drahtführungselement
- 22: Drahtführungselement
- 23: Reihe
- 24: Reihe
- 25: Drahtführungskanal
- 26: Drahtführungskanal
- 27: Seite
- 28: Seite

## Patentansprüche

1. Verteilereinrichtung, nämlich Verteilerblock, einer Telekommunikationsanlage, mit einer Aufnahmeeinrichtung, mit mehreren Verteilerleisten (20) und mit mehreren Drahtführungselementen (21, 22), wobei die Verteilerleisten (20) und die Drahtführungselemente (21, 22) in der Aufnahmeeinrichtung sandwichartig übereinander bzw. nebeneinander angeordnet sind, wobei jede Verteilerleiste (20) an einer Vorderseite der Verteilereinrichtung positionierte, insbesondere als IDC-Kontakte ausgebildete Anschlusselemente (a, b, a', b') für den Anschluss ankommender bzw. abgehender Kabeladern und Kontaktfedern aufweist, die mit den Anschlusselementen elektrisch leitend verbunden sind bzw. dieselben fortsetzen und als Funktionselemente Trennelemente oder Schaltelemente ausbilden, wobei jedes Drahtführungselement (21, 22) Drahtführungskanäle (25, 26) zur Führung der ankommenden bzw. abgehenden Kabeladern aufweist, derart, dass im Bereich jedes Drahtführungselements die Kabeladern an jeweils einer in etwa senkrecht zur Vorderseite der Verteilereinrichtung verlaufenden Seite über Eintrittsöffnungen der Drahtführungskanäle (25, 26) in dieselben einfädelbar und über an der Vorderseite der Verteilereinrichtung positionierte Austrittsöffnungen der Drahtführungskanäle (25, 26) aus denselben ausfädelbar und den Anschlusselementen (a, b, a', b') zuführbar sind, **dadurch gekennzeichnet, dass** die Drahtführungskanäle (25, 26) der Drahtführungselemente (21, 22) derart ausgeführt sind, dass sich zumindest einige der in unterschiedlichen Drahtführungskanälen desselben Drahtführungselements geführten Kabeladern im Bereich des jeweiligen Drahtführungselements (25, 26) ohne elektrischen Kontakt zwischen denselben überkreuzen.

2. Verteilereinrichtung nach Anspruch 1, **dadurch gekennzeichnet, dass** die Verteilerleisten (20) derart ausgeführt sind, dass sich zumindest einige der Kontaktfedern derselben Verteilerleiste ohne elektrischen Kontakt zwischen denselben überkreuzen.

3. Verteilereinrichtung nach Anspruch 1 oder 2, **dadurch gekennzeichnet, dass** jede Verteilerleiste (20) an der Vorderseite der Verteilereinrichtung in einer ersten Reihe (23) positionierte Anschlusselemente (a, b) für den Anschluss ankommender Kabeladern und in einer zweiten Reihe (24) positionierte Anschlusselemente (a', b') für den Anschluss abgehender Kabeladern aufweist.

4. Verteilereinrichtung nach Anspruch 3, **dadurch gekennzeichnet, dass** benachbart zur ersten Reihe (23) von Anschlusselementen (a, b) ein erstes Drahtführungselement (21) mit Drahtführungskanälen (25) positioniert ist, über die ausgehend von einer ersten in etwa senkrecht zur Vorderseite der Verteilereinrichtung verlaufenden Seite ankommende Kabeladern den Anschlusselementen (a, b) der ersten Reihe (23) zuführbar sind, und dass benachbart zur zweiten Reihe (24) von Anschlusselementen (a', b') ein zweites Drahtführungselement (22) mit Drahtführungskanälen (26) positioniert ist, über die ausgehend von einer zweiten in etwa senkrecht zur Vorderseite der Verteilereinrichtung verlaufenden Seite abgehende Kabeladern den Anschlusselementen (a', b') der zweiten Reihe (24) zuführbar sind, und dass die Drahtführungskanäle des ersten Drahtführungselements und/oder des zweiten Drahtführungselements derart ausgeführt sind, dass sich zumindest einige der in unterschiedlichen Drahtführungskanälen desselben Drahtführungselements geführten Kabeladern ohne elektrischen Kontakt zwischen denselben überkreuzen.

5. Verteilereinrichtung nach Anspruch 4, **dadurch gekennzeichnet, dass** dann, wenn entweder ausschließlich die Drahtführungskanäle des ersten Drahtführungselements (21) oder des zweiten Drahtführungselements (22) derart ausgeführt sind, dass sich zumindest einige der in unterschiedlichen Drahtführungskanälen desselben Drahtführungselements geführten Kabeladern ohne elektrischen Kontakt zwischen denselben überkreuzen, sich zumindest einige der Kontaktfedern der Verteilerleiste (20) ohne elektrischen Kontakt zwischen denselben überkreuzen.

6. Verteilereinrichtung nach Anspruch 4, **dadurch gekennzeichnet, dass** dann, wenn die Drahtführungskanäle (25, 26) des ersten Drahtführungselements (21) und des zweiten Drahtführungselements (22) derart ausgeführt sind, dass sich zumindest einige der in unterschiedlichen Drahtführungskanälen desselben Drahtführungselements geführten Kabeladern ohne elektrischen Kontakt zwischen denselben überkreuzen, die Kontaktfedern der Verteilerleiste sich nicht überkreuzen.

7. Verteilereinrichtung nach einem der Ansprüche 1 bis 6, **dadurch gekennzeichnet, dass** die Drahtführungskanäle (25, 26) der Drahtführungselemente (21, 22) derart ausgeführt sind, dass sich zumindest einige der in unterschiedlichen Drahtführungskanälen desselben Drahtführungselements geführten, benachbarten, verdrillten Kabeladerpaare unterschiedlicher Teilnehmer ohne elektrischen Kontakt zwischen denselben überkreuzen.

8. Verteilereinrichtung nach einem der Ansprüche 1 bis 7, **dadurch gekennzeichnet, dass** die Drahtführungskanäle der Drahtführungselemente derart ausgeführt sind, dass sich zumindest einige der in unterschiedlichen Drahtführungskanälen geführten, benachbarten, nicht-verdrillten Kabeladern unterschiedlicher Teilnehmer oder derselben Teilnehmer ohne elektrischen Kontakt zwischen denselben überkreuzen.

9. Verteilereinrichtung nach einem der Ansprüche 1 bis 8, **dadurch gekennzeichnet, dass** die Verteilerleisten (20) derart ausgeführt sind, dass sich zumindest einige der benachbarten Kontaktfedern unterschiedlicher Teilnehmer ohne elektrischen Kontakt zwischen denselben überkreuzen.

10. Verteilereinrichtung nach einem der Ansprüche 1 bis 9, **dadurch gekennzeichnet, dass** die Verteilerleisten (20) derart ausgeführt sind, dass sich zumindest einige der benachbarten Kontaktfedern derselben Teilnehmer ohne elektrischen Kontakt zwischen denselben überkreuzen.

11. Verteilerleiste einer Verteilereinrichtung einer Telekommunikationsanlage, mit zumindest an einer Vorderseite positionierten, insbesondere als IDC-Kontakte ausgebildeten Anschlusselementen für den Anschluss ankommender bzw. abgehender Kabeladern, und mit Kontaktfedern, die mit den Anschlusselementen elektrisch leitend verbunden sind bzw. dieselben fortsetzen und als Funktionselemente Trennelemente oder Schaltelemente oder Durchgangselemente ausbilden, **dadurch gekennzeichnet, dass** sich zumindest einige der Kontaktfedern der Verteilerleiste ohne elektrischen Kontakt zwischen denselben überkreuzen.

12. Verteilerleiste nach Anspruch 11, **dadurch gekennzeichnet, dass** sich zumindest einige der benachbarten Kontaktfedern unterschiedlicher Teilnehmer ohne elektrischen Kontakt zwischen denselben überkreuzen.

13. Verteilerleiste nach Anspruch 11 oder 12, **dadurch gekennzeichnet, dass** sich zumindest einige der benachbarten Kontaktfedern derselben Teilnehmer ohne elektrischen Kontakt zwischen denselben überkreuzen.

14. Verteilerleiste nach einem der Ansprüche 11 bis 13, **dadurch gekennzeichnet, dass** die Anschlusselementen für den Anschluss ankommender Kabeladern und die Anschlusselementen für den Anschluss abgehender Kabeladern allesamt an der Vorderseite der Verteilerleiste positioniert sind, wobei Kontaktfedern, die mit den Anschlusselementen elektrisch leitend verbunden sind bzw. dieselben fortsetzen, als Funktionselemente Trennelemente oder Schaltelemente ausbilden.

15. Verteilerleiste nach einem der Ansprüche 11 bis 14, **dadurch gekennzeichnet, dass** die Anschlusselementen für den Anschluss ankommender Kabeladern an der Vorderseite oder Rückseite der Verteilerleiste und die Anschlusselementen für den Anschluss abgehender Kabeladern an der jeweiligen gegenüberliegenden Rückseite oder Vorderseite der Verteilerleiste positioniert sind, wobei Kontaktfedern, die mit den Anschlusselementen elektrisch leitend verbunden sind bzw. dieselben fortsetzen, als Funktionselemente Durchgangselemente ausbilden.
